Europäisches Patentamt

European Patent Office

Office européen des brevets

(19)

(11) Veröffentlichungsnummer : **0 327 049 B1**

(12) **EUROPÄISCHE PATENTSCHRIFT**

(45) Veröffentlichungstag der Patentschrift :
26.08.92 Patentblatt 92/35

(21) Anmeldenummer : **89101696.6**

(22) Anmeldetag : **01.02.89**

(51) Int. Cl.⁵ : **H01J 9/40,** H01J 61/36, H01J 5/20, C03C 8/24

---

(54) **Verfahren zum vakuumdichten Verschliessen eines Keramikrohres.**

---

(30) Priorität : **04.02.88 DE 3803227**

(43) Veröffentlichungstag der Anmeldung :
**09.08.89 Patentblatt 89/32**

(45) Bekanntmachung des Hinweises auf die Patenterteilung :
**26.08.92 Patentblatt 92/35**

(84) Benannte Vertragsstaaten :
**BE DE FR GB NL**

(56) Entgegenhaltungen :
**DE-A- 2 065 299
GB-A- 1 022 432
PATENT ABSTRACTS OF JAPAN, unexamined applications, Field E, Band 8, Nr. 229, 20.Oktober 1984; THE PATENT OFFICE JAPANESE-GOVERNMENT Seite 106 E 273**

(56) Entgegenhaltungen :
**PATENT ABSTRACTS OF JAPAN, unexamined applications, Field C, Band 11, Nr. 200, 27.Juni 1987; THE PATENT OFFICE JAPANESEGO-VERNMENT Seite 72 C 431**

(73) Patentinhaber : **Hoechst CeramTec
Aktiengesellschaft
Wilhelmstrasse 14
W-8672 Selb (DE)**

(72) Erfinder : **Gradl, Reinhold
Tucherstrasse 16
W-8501 Rückersdorf (DE)**
Erfinder : **Popp, Klaus
Oedenbergstrasse 146
W-8500 Nürnberg 20 (DE)**

(74) Vertreter : **Spiess, Bernhard et al
Hoechst AG Zentrale Patentabteilung
Postfach 80 03 20
W-6230 Frankfurt am Main 80 (DE)**

## Beschreibung

Die vorliegende Erfindung betrifft ein Verfahren zum vakuumdichten Verschließen eines Rohres aus transluzenter Aluminiumoxid-Keramik mit einer metallischen Abdichtung, die eine metallische Stromdurchführung aufweist. Aus der DE-A-3 507 105 ist bereits ein Verfahren zur Herstellung einer Leuchtröhre bekannt, bei dem man in eine monolithische lichtdurchlässige Keramikröhre eine Stromzuführung einschiebt und dann die Öffnung mit einer schmelzenden Dichtmasse verschließt. Welche Dichtmasse verwendbar ist, wird nicht genau angegeben. Es ist ein Nachteil dieses Verfahrens, daß es auf monolithische Rohre beschränkt ist. Bei zylinderförmigen Rohren, deren Innendurchmesser an den Rohrenden merklich größer ist als die Stromdurchführung, ist nämlich nicht nur das Problem der Abdichtung Stromdurchführung/Deckel, sondern auch der Abdichtung Deckel/Zylinderrohr zu lösen.

In der DE-A-2 641 880 ist eine Keramik-Lotverbindung auf Basis $Al_2O_3$, CaO, MgO, $B_2O_3$ und $SiO_2$ für die vakuumdichte Abdichtung zwischen Keramik und Metallpartner beschrieben worden. Sie soll in ihrem Ausdehnungsverhalten dem $Al_2O_3$-Rohr nahekommen.

Zum Verschließen von nicht transluzenten Rohren aus $Al_2O_3$ mit einem Reingehalt unter 99 %, die kleine Kristallit-Korngrößen aufweisen, hat man bereits Metallisierungspasten verwendet, die Molybdän und ein Mangansilikat enthalten, das mit dem Rohrmaterial unter Bildung eines Spinells reagiert. Die Haftfestigkeit dieser Bindung sinkt aber mit steigender Kristallitgröße des $Al_2O_3$ ab und ist bei transluzentem $Al_2O_3$ gering.

Bei Verwendung der nach dem Stand der Technik beschriebenen Dichtungsmassen kommt es immer wieder zu Dichtungsfehlern, die zum Ausfall der Lampen führen.

Solche Fehler sind:

a) Schlechte Haftung der geschmolzenen keramischen Dichtungsmasse am Metallpartner.

b) Chemische Reaktion der Schmelze mit dem Metallpartner, dadurch kristallisiert die Dichtungsmasse aus.

c) Mikrorisse beim Betrieb der Lampe, aufgrund des unterschiedlichen Ausdehnungsverhaltens von Keramik, Metallpartner und Dichtungsmasse.

d) Chemischer Angriff der Dichtungsmasse durch Na.

In einer Reihe von Veröffentlichungen hat man versucht, diesen Dichtungsproblemen entgegenzuwirken.

Nach dem Vorschlag der DE-A-24 37 774 wird auf eine keramische Dichtmasse ganz verzichtet und die metallische Stromdurchführung übernimmt die Aufgabe der Abdichtung zwischen $Al_2O_3$-Rohr und einer keramischen Verschlußscheibe. Hierzu wird die Stromzuführung aus einer Molybdän-Folie gebildet, die zwischen Rohr und Scheibe eingesintert wird.

Dennoch fehlte noch eine absolut sichere Abdichtung der Keramik-Metallverbindung bei Entladungslampen aus transluzentem Aluminiumoxid.

Es wurde nun ein Verfahren zum vakuumdichten Verschließen eines zylinderförmigen Rohres aus transluzenter Aluminiumoxid-Keramik mit einer metallischen Abdichtung entahltend eine metallische Stromdurchführung gefunden, das dadurch gekennzeichnet ist, daß man

(A) auf die Enden des Rohres eine Metallisierungspaste aufbringt, die

    a) mindestens ein fein verteiltes Metallpulver, ausgewählt aus der Gruppe bestehend aus Wolfraum, Molybdän, Niob und Tantal,

    b) ein flüssiges organisches Bindemittel und

    c) ein pulverförmiges Ca-Mg-Silikat mit einem Schmelzpunkt im Bereich von 1 200 bis 1 500°C enthält,

(B) durch Einbrennen der Paste auf der Aluminiumoxid-Keramik in Absesenheit von seinerstoff eine dünne Metallschicht erzeugt,

(C) nach dem Einbrennen auf der zurückbleibenden dünnen Metallschicht eine weitere Schicht aus metallischem Nickel oder Kupfer abscheidet,

(D) in das Rohr im Bereich der Rohrenden eine metallische Stromdurchführung einlegt und die Enden mit Hilfe eines Hartlots, das einen Schmelzpunkt zwischen 950 und 1200°C aufweist, gegebenenfalls unter Verwendung von scheibenförmigen Dichtelementen, an den metallisierten Stellen vakuumdicht verschließt.

Es ist bereits bekannt, zur Metallisierung höchstreiner und praktisch $SiO_2$-freier Korundkeramik ein Gemisch aus Molybdän-Pulver und Mangan-Silikat aufzuschmelzen (Ber. d. deut. Ker. Ges., 1965, Seite 452). Die dort verwendete Aluminiumoxid-Keramik enthielt weniger als 0,01 % $SiO_2$. Je geringer der Gehalt an Glasphase im $Al_2O_3$ ist, umso schwerer ist üblicherweise die Verankerung der Metallisierungsschicht. Daher ist transluzentes, hochreines $Al_2O_3$ schwer zu metallisieren.

Für das erfindungsgemäße Verfahren ist ein $SiO_2$-Gehalt im $Al_2O_3$ überhaupt nicht notwendig. Erst recht lassen sich Teile mit geringem $SiO_2$-Gehaltz (z.B. maximal 10 ppm $SiO_2$) oder 10 bis 50 ppm $SiO_2$ metallisieren.

Die Korngröße des Metallpulvers sollte nicht größer als 4 μm (Mikrometer) sein. Je feiner das Pulver ist, um so besser sintert es zusammen und um so leichter läßt sich beim Einbrennen eine dichte Metallschicht erzeugen. Bewährt hat sich eine Korngrößenverteilung zwischen 0,5 und 2,5 $\mu$m. Am günstigsten verhält sich Wolfram, fast ebensogut Molybdän.

Das flüssige organische Bindemittel kann frei sein von Lösungsmittel. Verwendbar sind in diesem Fall z. B. niederkondensierte Phenol-Formaldehyd-Harze. Bevorzugt sind wasserfreie Lösungen eines organischen Bindemittels in einem organischem Lösungsmittel. Bevorzugt sind Bindemittel, die in organischen Lösemittels löslich sind, z. B. Phenolharze, Acrylharze, Phthalatharze, Nitrolacke, Polyvinylacetale und Polyvinylether. Durch die Verdunstungszahl des Lösemittels (Beispiele: 2,1 für Aceton; 190 für Butylglycolacetat) kann die Trockengeschwindigkeit der aufgetragenen Paste gesteuert werden.

Das Bindemittel soll die Komponenten vor dem Brand mit dem Aluminiumoxid-Rohr vorübergehend verbinden, und es soll sich beim Einbrennen zersetzen oder verflüchtigen. Weitere Bindemittel mit dieser Eigenschaft sind Colophonium, Alkydharze, Cellulosederivate, Cumaron-Inden-Harze, Epoxidharze, Furanharze, Isocyanatharze, ungesättigte Polyester, Harnstoffharze, Vinylharze und Melaminharze.

Das organische Lösemittel für das Bindemittel ist nicht kritisch. Bevorzugt sind Lösemittel, die leicht verdampfen, da dann rasch gearbeitet werden kann. Bevorzugt sind Lösungen des Bindemittels in Alkohol.

Die Korngröße des pulverförmigen Kalzium-Magnesium-Silikats soll unter 15 $\mu$m, insbesondere im Bereich von 1 - 3 $\mu$m liegen. Günstig sind Gehalte der Fritte von 50 - 70 Gew.-% $SiO_2$, 20 - 40 % CaO und 5 - 15 % MgO. Neben Metallpulver, Silikat und Bindemittel kann die Paste vorteilhafterweise ferner Anteile von bis zu 4 %, insbesondere 0,5 - 3 Gew.-% an $TiO_2$ enthalten. Die mengenmäßigen Anteile der Komponenten der Metallisierungspaste können in weiten Grenzen schwanken. Bevorzugt ist ein Verhältnis von Metallpulver/Silikat von 65 : 35 bis 95 : 5, insbesondere 75 : 25 bis 95 : 5. Der Gewichtsanteil des flüssigen organischen Bindemittels beträgt etwa 5 bis 30 Gew.-%.

Die Paste wird in einer Dicke von 5 - 30 $\mu$m, vorzugsweise 10 - 20 $\mu$m, z. B. durch Siebdrucken oder Bänderstreichen aufgetragen. Die daraus beim Aufsintern erzeugte guthaftende hochvakuumdichte Metallschicht weist etwa die gleiche Dicke auf.

Das Einbrennen der Metallisierungsschicht erfolgt in Abwesenheit von Sauerstoff. Bewährt hat sich eine Stickstoff-Wasserstoffatmosphäre mit 10 - 40 Vol.-% $H_2$, Rest Stickstoff. Es ist für eine vollständige Bindemittel-Entfernung und zur Erzielung guter Haftfestigkeiten günstig, wenn diese Atmosphäre noch einen geringen Wassergehalt aufweist und insbesondere der Taupunkt der feuchten Atmosphäre bei 10 bis 40°C liegt. Das Einbrennen der Metallisierungspaste erfolgt bei Temperaturen, die oberhalb des Schmelzpunkts des pulverförmiges Silikats, aber unterhalb der Sintertemperatur von Aluminiumoxidkeramik (ca. 1 750°C) liegen.

Da die unmittelbar eingebrannte Metallschicht von Hartlot schwer benetzt wird, ist es sinnvoll, sie durch eine weitere Metallschicht aus Nickel oder Kupfer zu verstärken. Nickel kann z. B. durch Auftragen einer Nikkeloxid-Paste mit nachfolgendem Einbrennen in reduzierender Atmosphäre oder besser auf elektrolytischem Weg aufgebracht werden. Auch eine chemische Vernickelung ist möglich. Auch Kupfer kann chemisch, noch besser aber galvanisch abgeschieden werden.

Die Verstärkung einer eingebrannten Metallisierung durch eine Nickelschicht ist bekannt aus den Berichten der Deutschen Keramischen Gesellschaft 1965, Seite 405.

Das verwendete Hartlot mit einem Schmelzpunkt von 950 bis 1 200°C kann z. B. aus Kupfer, aus Silber oder einer Kupfer-Silber-, Kupfer-Nickel- oder Palladium-Legierung bestehen. Bevorzugt sind Kupfer-Silber-Palladium-Legierungen. Da beim Betrieb der Lampe an den Enden der Brennerrohre Temperaturen bis 900°C auftreten können, sind Lote mit einem Schmelzpunkt von mindestens 1 000°C bevorzugt.

Es ist günstig, wenn das Einlöten in Vakuum (ca. 0,0001 mbar) oder unter Schutzgas stattfindet, damit die Metallisierungsschicht nicht oxidiert wird.

Die Stromdurchführung ist ein Metallrohr oder ein Metalldraht, dessen Durchmesser bis 0,5 mm, insbesondere bis 0,2 mm, kleiner ist als der des inneren Durchmessers des Endes des $Al_2O_3$-Rohrs bzw. des dort aufgebrachten Dichtungselements aus Metall. Üblich sind Durchmesser von 1 bis 5 mm, insbesondere 1,5 bis 3,5 mm. An dem Ende, das ins Innere des Keramikrohres ragt, kann die Stromdurchführung eine meist wendelförmige Elektrode tragen, wie sie z. B. in der DE-A-30 09 561 abgebildet ist.

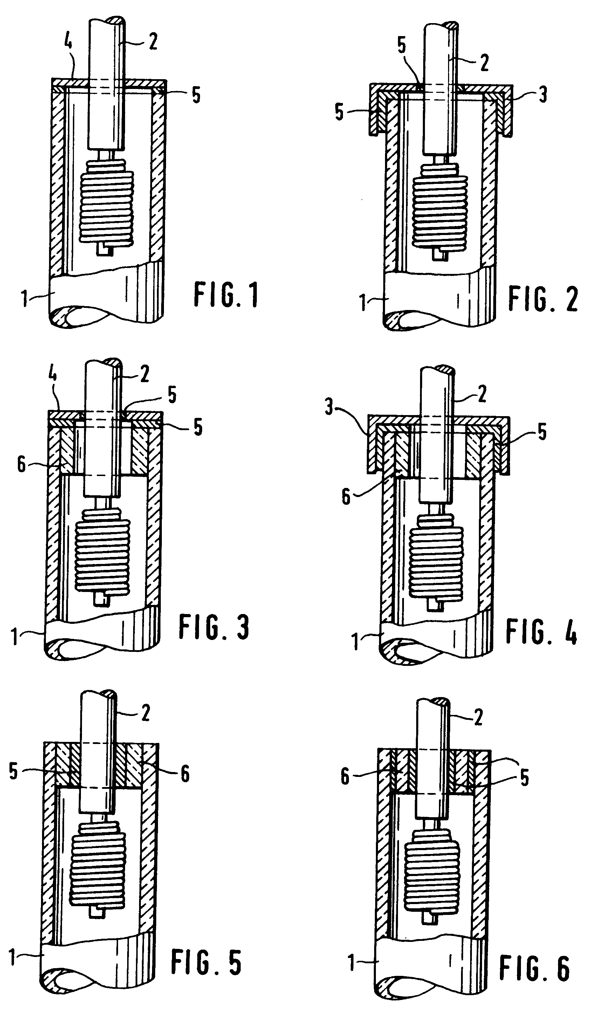

Wenn das Ende des Rohres deutlich weiter als die Stromdurchführung ist, so ist es vorteilhaft und leichter, das Rohr im Bereich der Enden durch Auflöten eines scheibenförmigen Dichtelements, z. B. einer Metallscheibe oder Metallhaube zu verschließen. Bei Metallscheiben werden nur die Stirnseiten des Rohres metallisiert. Bei Hauben werden die Außenseiten des Rohres im Bereich der Enden, eventuell auch -die Stirnseiten, metallisiert. Auf diese Weise verschlossene Rohrenden sind in den Figuren 2 und 4 dargestellt. Wegen der größeren Lötfläche dichtet die Haube zuverlässiger als eine Scheibe.

Das Dichtelement aus Metall kann in der Mitte ein kleines Loch aufweisen, durch das später die Stromdurchführung eingeschoben und eingelötet wird. Stromdurchführung und Dichtelement können jedoch auch aus einem Stück gefertigt sein. Diese Ausführungsform ist in Figur 1 und 4 dargestellt. Dabei bedeutet 1 das Aluminiumoxidrohr, 2 die Stromdurchführung, 3 ein haubenförmiges bzw. 4 ein scheibenförmiges Dichtelement aus Metall und 5 das Metallot. In den Figuren ist die Menge des Metallotes übertrieben dargestellt und die Metallisierung (zwischen Aluminiumoxid und Lot) nicht gezeichnet.

Als Material für das Dichtelement (wie auch für die Stromdurchführung) eignen sich hochschmelzende Metalle wie Wolfram, Molybdän, Niob, Tantal oder spezielle Eisen-Nickel-Kobalt-Legierungen, z.B. VACON®, die dem Fachmann bekannt sind. Die Dichtelemente besitzen eine Dicke von 0,5 - 2 mm. Der Durchmesser ist etwas größer als der Durchmesser des Entladungsgefäßes.

Für das Festlöten des Dichtelements (3 oder 4) am Rohr kann das gleiche Hartlot (5) verwendet werden wie für ein Einlöten der Stromdurchführung. Sinnvoll ist es, wenn für das erste Löten ein Lot mit höherem Schmelzpunkt als für das zweite Löten verwendet wird.

Alternativ ist es möglich, den Innendurchmesser eines weiten Rohres vor dem Verschließen noch etwas enger zu machen. Hierzu kann man entweder vor der Metallisierung in das Innere des Rohres im Bereich des Rohrendes ein passend sitzendes kurzes Rohrstück aus hochprozentiger $Al_2O_3$-Keramik einsetzen und einsintern. Die verengten Rohre können entweder an der Stirnseite (Figur 3), an der Stirnseite und der Außenseite (Figur 4) oder nur an der Innenseite (Figur 5) metallisiert werden.

Durch die Verengung des Rohres wird die Auflagefläche der Metallscheibe 4 in Figur 3 oder der Metallhaube 3 in Figur 4 und damit die Dichtfläche vergrößert.

Bei Verwendung einer Metallhaube oder -scheibe werden innerer Teil und äußerer Teil der Stromdurchführung meist in einer Geraden liegen. Ein solches System kann z. B. durch Drehen aus einem Zylinderblock aus Metall oder durch Einlöten einer durchgehenden Stromdurchführung in eine Öffnung der Scheibe erzeugt werden. Es ist auch möglich, daß der äußere Teil der Stromzuführung auf der Außenseite und der innere Teil auf der Innenseite des nicht duchbrochenen Dichtelements angelötet sind.

Wenn nach der Verengung des Querschnittes der Innendurchmesser nur noch wenig größer ist als der Außendurchmesser der Stromdurchführung, so kann auf einer Metallhaube oder Metallscheibe verzichtet werden. In diesem Fall reicht es aus, die Innenseite des verengten Keramik-Rohres zu metallisieren und die Stromdurchführung einzulöten. Ein Rohrende, das mit diesem Verfahren verschlossen wurde, ist in Figur 5 dargestellt.

Die Verengung eines auf der Innenseite metallisierten Aluminiumoxid-Rohres kann auch dadurch geschehen, daß man ein passend sitzendes kurzes Rohrstück aus hochprozentiger Aluminiumoxid-Keramik auf der Außenseite und gleichzeitig auf der Innenseite metallisiert. "Hochprozentige Aluminiumoxid-Keramik" bedeutet hier eine Keramik mit mindestens 99 Gew.-% $Al_2O_3$, die transluzent sein kann, aber nicht muß. Der Außendurchmesser dieses Rohrstückes entspricht etwa dem Innendurchmesser des Aluminiumoxid-Rohres. Das kurze Rohrstück wird in das transluzente Aluminiumoxid-Rohr im Bereich des Rohrendes eingesetzt und mit Hilfe des Hartlotes eingelötet. Gleichzeitig wird eine Stromdurchführung in das Innere des Rohrstückes eingelötet und so das Rohr verschlossen. Bei Verwendung von Loten mit unterschiedlichem Schmelzpunkt kann das Einlöten von Stromdurchführung und Innenrohr auch nacheinander erfolgen. Das Ende eines Keramikrohres, das auf diese Weise vakuumdicht verschlossen wurde, ist in Figur 6 dargestellt.

Bei allen Ausführungsformen kann auf den Innenseiten der Stirnflächen eine Scheibe (aus hochprozentigem $Al_2O_3$) eingesintert sein. Solche Scheiben sind (in nichtebener Form) aus der EP-A-186 348 bekannt. Sie sollen die metallische Abdeckung und die Lötverbindung vor direkter Temperatureinstrahlung und zusätzlich vor direktem Angriff durch Natrium schützen.

Es ist ein Vorteil des eingesetzten Ca-Mg-Silikats, daß es einen hohen Erweichungsbereich (1 350 - 1 500°C) aufweist, der beim Löten nicht erreicht wird. Es haftet ausgezeichnet auf dem $Al_2O_3$-Rohr und dem Metall. Sein thermischer Ausdehnungskoeffizient kommt dem des $Al_2O_3$ nahe, so daß kaum thermische Spannungen auftreten. Es wird auch nach längerer Zeit nicht von Natriumdampf angegriffen.

Das erfindungsgemäße Verfahren eignet sich gut, um Brennerrohre von Natriumhoch- oder -niederdrucklampen vakuumdicht und dauerhaft zu verschließen. In transluzenten $Al_2O_3$-Rohren liegt der Reingehalt an $Al_2O_3$ immer über 99,7 % und die Kristallitgröße über 20 $\mu$m. Obwohl unter konventionellen Bedingungen häufig Schwierigkeiten auftreten, weil das bisher benutzte Dichtmaterial die Stromdurchführung nicht benetzt, lassen sich nach dem erfindungsgemäßen Verfahren dichte Verschlüsse herstellen. Die Temperaturwechselbeständigkeit der Abdichtung ist höher als bei Verwendung von Mangansilikat.

Mit dem erfindungsgemäßen Verfahren lassen sich Haftfestigkeiten zwischen transluzentem $Al_2O_3$ und Metallpartner von mehr als 100 N/mm² (getestet an speziellem Prüfkörper und mit einachsigem Zug) erreichen.

Die Erfindung wird durch das Beispiel erläutert.

Beispiel

a) Zur Herstellung einer Natrium-Hochdruckdampflampe wird ein transluzentes Aluminiumoxidrohr der Länge ca. 10 cm einem Innendurchmesser von 5 mm und einer Wandstärke von 1 mm eingesetzt. Der Reingehalt an Aluminiumoxid liegt bei 99,9 Gew.-%, die mittlere Korngröße des gesinterten Rohres bei 20 µm. Rohre mit Korngrößen von 40 µm geben nahezu gleiche Ergebnisse.

b) Eine Mischung aus 102 g $SiO_2$, 96,5 g $CaCO_3$ (entsprechend 54 g CaO) und 14 g MgO wird vermahlen und anschließend bei einer Temperatur von 1500°C gefrittet. Die zerkleinerte Fritte wird mit 830 g gesichtetem Wolframpulver vermischt. Die Mischung wird gemahlen, bis die mittlere Korngröße unter 5 Mikron liegt. Zum Versatz werden noch 1,3 g $TiO_2$ zugegeben. Das Pulver wird in 180 g eines harzhaltigen Lacksystems auf Basis Nitrolack, das noch 20 g Amylacetat als flüchtiges Verdünnungsmittel enthält, dispergiert. Die Viskosität der erhaltenen Paste liegt bei 500 - 600 P (= 50 - 60 Pa · s). Diese feindisperse Paste wird mittels Siebdruck auf die Stirnseiten des keramischen Brennerrohrs aufgetragen. Die Schichtstärke schwankt zwischen 10 und 20 µm Dicke.

c) Zum Aufsintern der Metallisierungsschicht werden die Rohre auf Prismenbleche aus Molybdän abgelegt und im Brennofen bis 1500°C aufgeheizt. Die Brennatmosphäre enthält 82 % Stickstoff, Rest feuchter Wasserstoff. Der Taupunkt liegt bei 10°C.

d) Zur besseren Benetzung durch das Hartlot wird die aufgesinterte Metallisierung während 10 Minuten galvanisch bei einer Stromstärke von 10 A vernickelt. Dabei wird eine Nickelschicht von 1 µm aufgetragen.

e) Auf beide metallisierten Stirnseiten des Rohres wird gleichzeitig je ein 0,3 mm dicker Lötring aus Cu/Pd/Ag aufgesetzt. Dann wird je eine metallische Abschlußscheibe aus Vacon (54Fe28Ni8Co; Dicke 1 mm), deren Durchmesser etwas größer ist als der Durchmesser des Entladungsgefäßes, auf den Lotring aufgelegt. Das Oxidrohr wird senkrecht gestellt und die untere Scheibe durch eine hochtemperaturbeständige Unterstützung am Herausfallen gehindert. Oxidrohr und Unterstützung wandern durch einen kontinuierlich betriebenen Tunnelofen. Dabei werden die Scheiben mit dem $Al_2O_3$-Rohr verlötet. Die Scheiben weisen mittig eine Bohrung auf, die um ca. 0,3 mm größer ist als die später eingelegte Stromdurchführung. Die Löttemperatur beträgt 1105°C. Das Löten unter Hochvakuum gewährleistet eine porenfreie Verbindung.

f) Anschließend wird auf die beiden Enden des Rohres im Bereich der Bohrungen der Abschlußscheiben ein Lotring aufgesetzt, und dann die als Rohr ausgebildete Stromdurchführung in die Bohrung eingelegt und das Rohrende durch das Beschriebene Lötverfahren verschlossen. Eine Stromdurchführung ist als Rohr mit seitlichem Loch im Inneren des Brennerrohres ausgebildet. Das Rohr wird nach dem Löten evakuiert und mit Na-amalgam Gefüllt und mittels Quetschung verschlossen.

Die Haftfestigkeit zwischen transluzentem Aluminiumoxid und Metallscheibe beträgt beim so hergestellten Rohr mehr als 100 N/mm².

## Patentansprüche

1. Verfahren zum vakuumdichten Verschließen eines Zylinderrohres aus transluzenter Aluminiumoxid-Keramik unter Verwendung einer metallischen Stromdurchführung, dadurch gekennzeichnet, daß man

(A) auf die Enden des Rohres eine Metallisierungspaste aufbringt, die

a) mindestens ein feinverteiltes Metallpulver, ausgewählt aus der Gruppe bestehend aus Wolfram, Molybdän, Niob und Tantal

b) ein flüssiges organisches Bindemittel und

c) ein pulverförmiges Calcium-Magnesium-Silikat mit einem Schmelzpunkt im Bereich von 1200-1500°C enthält,

(B) durch Einbrennen der Paste auf der Aluminiumoxid-Keramik in Abwesenheit von Sauerstoff eine dünne Metallschicht erzeugt,

(C) nach dem Einbrennen der Metallisierungspaste auf der zurückbleibenden Metallschicht eine weitere Schicht aus Nickel oder Kupfer abscheidet,

(D) in das Rohr im Bereich der Rohrenden metallische Stromdurchführungen einlegt und die Enden mit Hilfe eines Hartlots mit einem Schmelzpunkt zwischen 950 und 1200°C, gegebenenfalls unter Verwendung von scheibenförmigen Dichtelementen, an den metallisierten Stellen vakuumdicht verschließt.

2. Verfahren nach Anspruch 1, dadurch gekennzeichnet, daß die Abscheidung von Nickel und Kupfer galvanisch erfolgt.

3. Verfahren nach Anspruch 1, dadurch gekennzeichnet, daß das Calcium-Magnesium-Silikat 50 - 70 Gew.-% $SiO_2$, 20 - 40 Gew.-% CaO und 5 - 15 Gew.-% MgO enthält.

4. Verfahren nach Anspruch 1 oder 3, dadurch gekennzeichnet, daß das Calcium-Magnesium-Silikat praktisch frei ist von Bor und/oder Aluminium.

5. Verfahren nach Anspruch 1, dadurch gekennzeichnet, daß das Einbrennen der Metallisierungsschicht in Stickstoff-Wasserstoffatmosphäre stattfindet.

6. Verfahren nach Anspruch 5, dadurch gekennzeichnet, daß man in einer feuchten Wasserstoffatmosphäre arbeitet.

7. Verfahren nach Anspruch 6, dadurch gekennzeichnet, daß der Taupunkt der feuchten Wasserstoffatmosphäre bei 10 bis 40°C liegt.

8. Verfahren nach Anspruch 1, dadurch gekennzeichnet, daß das verwendete Hartlot ausgewählt ist aus der Gruppe bestehend aus Kupfer und Silber.

9. Verfahren nach Anspruch 1, dadurch gekennzeichnet, daß das Hartlot eine Kupfer-Silber-Legierung ist.

10. Verfahren nach Anspruch 9, dadurch gekennzeichnet, daß das eingesetzte Hartlot eine Kupfer-Silber-Palladium-Legierung darstellt.

11. Verfahren nach Anspruch 1, dadurch gekennzeichnet, daß eine Scheibe oder Kappe aus einem schwer schmelzbaren Metall mit Hilfe des Hartlots auf die Metallschicht aufgelötet und so das Aluminiumoxid-Rohr vakuumdicht verschlossen wird.

12. Verfahren nach Anspruch 11, dadurch gekennzeichnet, daß die aufgelötete Scheibe oder Kappe mit einer Stromdurchführung versehen sind.

13. Verfahren nach Anspruch 11, dadurch gekennzeichnet, daß die Scheibe oder Kappe aus Wolfram, Molybdän, Niob, Tantal oder einer Eisen-Nickel-Kobalt-Legierung besteht.

14. Verfahren nach Anspruch 1, dadurch gekennzeichnet, daß das Einlöten bei Temperaturen über 950°C in Vakuum oder Schutzgas stattfindet.

15. Verfahren nach Anspruch 1, dadurch gekennzeichnet, daß man vor der Metallisierung in das Innere des Rohres im Bereich des Rohrendes zwecks Verengung des Querschnitts ein passend sitzendes kurzes Rohrstück aus hochprozentiger $Al_2O_3$-Keramik einsetzt und einsintert, das eingesinterte Rohrstück an der Innenseite metallisiert, die metallische Stromdurchführung ohne Verwendung einer Metallscheibe oder -kappe in die metallisierte Innenbohrung einlegt und vakuumdicht einlötet.

16. Verfahren nach Anspruch 1, dadurch gekennzeichnet, daß man vor der Metallisierung in das Innere des Rohres im Bereich des Rohrendes zwecks Verengung des Querschnitts ein passend sitzendes kurzes Rohrstück aus hochprozentiger $Al_2O_3$-Keramik einsetzt und einsintert, man Rohrstück und Rohr an der Stirnseite metallisiert und an der Stirnseite eine Metallscheibe der Metallkappe aus einem schwer schmelzbaren Metall mit Stromdurchführung mit Hilfe von Hartlot auf die Metallschicht vakuumdicht auflötet.

17. Verfahren nach Anspruch 1, dadurch gekennzeichnet, daß man das $Al_2O_3$-Rohr im Bereich der Rohrenden innen metallisiert, ein passend sitzendes kurzes Rohrstück aus hochprozentiger $Al_2O_3$-Keramik, dessen Außendurchmesser etwa dem des Innendurchmessers des $Al_2O_3$-Rohres entspricht, auf der Außenseite und Innenseite metallisiert, in das transluzente, innen metallisierte $Al_2O_3$-Rohr im Bereich des Rohrendes einsetzt und mit Hilfe des Hartlots einlötet, man eine Stromdurchführung in das Innere des kurzen Rohrstücks nach dessen Metallisierung einlötet und so gleichzeitig das Rohr verschließt.

**Claims**

1. A process for vacuum-tight sealing of a cylindrical tube of translucent alumna ceramic, using a metallic current bushing, which comprises

   (A) applying to the ends of the tube a metallizing paste which contains

      a) at least one finely dispersed metal powder, selected from the group comprising tungsten, molybdenum, niobium and tantalum,

      b) a liquid organic binder and

      c) a pulverulent calcium-magnesium silicate having a melting point in the range 1200 - 1500°C,

   (B) producing a thin metal layer on the alumina ceramic in the absence of oxygen by burning the paste in,

   (C) after burning-in of the metallizing paste, depositing a further layer of nickel or copper on the remaining metal layer,

   (D) inserting metallic current bushings into the tube in the region of the tube ends and sealing the ends vacuum-tight in the metallized areas by means of a brazing solder having a melting point between 950 and 1200°C, if necessary with the use of disk-shaped gasket elements.

2. The process as claimed in claim 1, wherein the deposition of nickel and copper is carried out by electroplating.

3. The process as claimed in claim 1, wherein the calcium-magnesium silicate contains 50 - 70% by weight of $SiO_2$, 20 - 40% by weight of $CaO$ and 5 - 15% by weight of $MgO$.

4. The process as claimed in claim 1 or 3, wherein the calcium-magnesium silicate is virtually free of boron and/or aluminum.

5. The process as claimed in claim 1, wherein the burning-in of the metallizing layer takes place in a nitrogen/hydrogen atmosphere.

6. The process as claimed in claim 5, which is carried out in a moist hydrogen atmosphere.

7. The process as claimed in claim 6, wherein the dew point of the moist hydrogen atmosphere is 10 to 40°C.

8. The process as claimed in claim 1, wherein the brazing solder used is selected from the group comprising copper and silver.

9. The process as claimed in claim 1, wherein the brazing solder is a copper/silver alloy.

10. The process as claimed in claim 9, wherein the brazing solder employed is a copper/silver/palladium alloy.

11. The process as claimed in claim 1, wherein a disk or cap of a refractory metal is soldered to the metal layer by means of the brazing solder and the alumina tube is sealed vacuum-tight in this way.

12. The process as claimed in claim 11, wherein the soldered-on disk or cap is provided with a current bushing.

13. The process as claimed in claim 11, wherein the disk or cap is composed of tungsten, molybdenum, niobium, tantalum or an iron/nickel/cobalt alloy.

14. The process as claimed in claim 1, wherein the soldering-in is carried out at temperatures above 950°C in vacuo or under a blanketing gas.

15. The process as claimed in claim 1, which comprises, before the metallization, inserting a close-fitting short tube piece of high-percentage $Al_2O_3$ ceramic into the interior of the tube in the region of the tube end, in order to narrow the cross-section, and sintering it in, metallizing the sintered-in tube piece on the inside, inserting the metallic current bushing into the metallized inner bore without using a metal disk or cap, and soldering it in vacuum-tight.

16. The process as claimed in claim 1, which comprises, before the metallization, inserting a close-fitting short tube piece of high-percentage $Al_2O_3$ ceramic into the interior of the tube in the region of the tube end, in order to narrow the cross-section, and sintering it in, metallizing the tube piece and tube on the end face and soldering a metal disk or metal cap of a refractory metal with a current bushing vacuum-tight to the metal layer at the end face by means of brazing solder.

17. The process as claimed in claim 1, which comprises metallizing the $Al_2O_3$ tube on the inside in the region of the tube ends, metallizing a close-fitting short tube piece of high-percentage $Al_2O_3$ ceramic, the external diameter of which approximately corresponds to the internal diameter of the $Al_2O_3$ tube, on the outside and inside, inserting the tube piece into the translucent $Al_2O_3$ tube, metallized on the inside, in the region of the tube end and soldering it in by means of the brazing solder, soldering a current bushing into the interior of the short tube piece, after the latter has been metallized, and thus simultaneously sealing the tube.

## Revendications

1. Procédé pour fermer, d'une manière étanche au vide, un tube cylindrique réalisé en une céramique translucide à base d'oxyde d'aluminium, moyennant l'utilisation d'un élément de traversée métallique pour le courant, caractérisé par le fait que

(A) on dépose aux extrémités du tube une pâte de métallisation qui contient

a) au moins une poudre métallique finement divisée, choisie dans le groupe comprenant le tungstène, le molybdène, le niobium et le tantale,

b) un liant organique liquide, et

c) un silicate de calcium et de magnésium pulvérulent possédant un point de fusion situé dans la gamme de 1200-1500°C,

(B) on forme une couche métallique mince en fixant par cuisson la pâte sur la céramique à base d'oxyde d'aluminium en l'absence d'oxygène,

(C) après la fixation par cuisson de la pâte de métallisation, on dépose une autre couche de nickel ou de cuivre sur la couche métallique subsistante,

(D) on insère des élément de traversée métallique pour le courant, dans le tube au niveau de la zone des extrémités de ce dernier et on ferme d'une manière étanche au vide les extrémités, au niveau des emplacements métallisés, à l'aide d'une brasure forte possédant un point de fusion compris entre 950 et 1200°C, éventuellement moyennant l'utilisation d'éléments d'étanchéité en forme de disques.

2. Procédé selon la revendication 1, caractérisé en ce que le dépôt de nickel et de cuivre s'effectue galvaniquement.

3. Procédé selon la revendication 1, caractérisé en ce que le silicate de calcium et de magnésium contient 50-70 % en poids de $SiO_2$, 20-40 % de CaO et 5-15 % en poids de MgO.

4. Procédé selon la revendication 1 ou 3, caractérisé en ce que le silicate de calcium et de magnésium est pratiquement exempt de bore et/ou d'aluminium.

5. Procédé selon la revendication 1, caractérisé en ce que la fixation par cuisson de la couche de métallisation s'effectue dans une atmosphère d'azote et d'hydrogène.

6. Procédé selon la revendication 5, caractérisé en ce qu'on effectue le traitement dans une atmosphère d'hydrogène humide.

7. Procédé selon la revendication 6, caractérisé en ce que le point de rosée de l'atmosphère d'hydrogène humide est compris entre 10 et 40°C.

8. Procédé selon la revendication 1, caractérisé en ce qu'on choisit la brasure forte utilisée dans le groupe comprenant le cuivre et l'argent.

9. Procédé selon la revendication 1, caractérisé en ce que la brasure forte est un alliage de cuivre et d'argent.

10. Procédé selon la revendication 9, caractérisé en ce que la brasure forte utilisée représente un alliage de

8

cuivre-argent-palladium.

11. Procédé selon la revendication 1, caractérisé en ce qu'on fixe par brasage un disque ou un capuchon formé d'un métal difficilement fusible, sur la couche métallique à l'aide de la brasure forte et qu'on ferme ainsi d'une manière étanche au vide le tube formé d'oxyde d'aluminium.

12. Procédé selon la revendication 11, caractérisé en ce que le disque ou le capuchon fixé par brasage est équipé d'un élément de traversée pour le courant.

13. Procédé selon la revendication 11, caractérisé en ce que le disque ou le capuchon est réalisé en tungstène, en molybdène, en niobium, en tantale ou en un alliage fer-nickel-cobalt.

14. Procédé selon la revendication 1, caractérisé en ce que le brasage est réalisé à des températures dépassant 950°C sous vide ou dans un gaz protecteur.

15. Procédé selon la revendication 1, caractérisé en ce qu'avant la métallisation, on introduit et qu'on fixe par frittage à l'intérieur du tube, dans la zone de l'extrémité de ce dernier, pour rétrécir la section transversale, un court élément tubulaire monté de façon adaptée et formé par une céramique à base de $Al_2O_3$ présent en un haut pourcentage, qu'on métallise la face intérieure de l'élément tubulaire fixé par frittage, et qu'on introduit et on fixe par brasage de façon étanche au vide l'élément de traversée métallique pour le courant, sans utiliser aucun disque ou capuchon métallique, dans le perçage intérieur métallisé.

16. Procédé selon la revendication 1, caractérisé en ce qu'avant la métallisation, on introduit et qu'on fixe par frittage à l'intérieur du tube, dans la zone de l'extrémité de ce dernier, pour rétrécir la section transversale, un court élément tubulaire monté de façon adaptée et formé par une céramique à base de $Al_2O_3$ présent en un haut pourcentage, qu'on métallise la face frontale de l'élément tubulaire et du tube et qu'on fixe par brasage d'une manière étanche au vide, à l'aide d'une brasure forte, sur la face frontale, un disque métallique ou un capuchon métallique formé d'un métal difficilement fusible et comportant un élément de traversée pour le courant, sur la couche métallique.

17. Procédé selon la revendication 1, caractérisé en ce qu'on métallise intérieurement le tube en $Al_2O_3$ au niveau de ses extrémités, qu'on métallise la face extérieure et la face intérieure d'un court élément tubulaire monté de façon adaptée et réalisé en une céramique à base de $Al_2O_3$ présent en un haut pourcentage, dont le diamètre extérieur correspond approximativement au diamètre intérieur du tube en $Al_2O_3$, qu'on introduit et qu'on fixe par brasage à l'aide d'une brasure forte l'élément tubulaire dans le tube translucide en $Al_2O_3$ métallisé intérieurement, dans la zone d'extrémité de ce tube, qu'on fixe par brasage un élément de traversée du courant à l'intérieur du court élément tubulaire après la métallisation de ce dernier et qu'on ferme ainsi simultanément le tube.

FIG. 1

FIG. 2

FIG. 3

FIG. 4

FIG. 5

FIG. 6